# EUROPÄISCHE PATENTANMELDUNG

(11) **EP 3 461 984 A1**
(43) Veröffentlichungstag der Anmeldung: **03.04.2019**
(21) Anmeldenummer: 18194432.3
(22) Anmeldetag: 14.09.2018
(51) Int. Cl.: E06B 3/96, E06B 3/964, E06B 3/968

(54) **ECK- UND/ODER STOSSVERBINDUNG**

(30) Priorität: 27.09.2017 DE 102017217183
(71) Anmelder: GEZE GmbH, 71229 Leonberg (DE)
(72) Erfinder: Böhmel, Philipp, 71229 Leonberg (DE)

(57) **Zusammenfassung**

Eine Eck- und/oder Stoßverbindung zweier Hohlprofile eines Profilsystems, insbesondere eines Profilsystems einer Tür, eines Fensters oder dergleichen, umfasst einen als Verbundprofil ausgeführten Eck-/Stoßverbinder mit einem zumindest im Wesentlichen vollständig in eines der beiden Hohlprofile formschlüssig einsetzbaren Grundkörper, der über elastische, insbesondere thermisch isolierende, Stege miteinander verbundene Teilprofile aufweist, die mit in Bohrungen eingesetzten Schrauben, Bolzen und/oder dergleichen versehen sind, durch die der Eck-/Stoßverbinder in den beiden Hohlprofilen und die beiden Hohlprofile relativ zueinander fixiert sind und eine insbesondere mehrachsige formschlüssige Verbindung der beiden Hohlprofile hergestellt ist. Es wird auch ein Eck-/Stoßverbinder für eine solche Eck- und/oder Stoßverbindung angegeben.

## Beschreibung

Die Erfindung betrifft eine Eck- und/oder Stoßverbindung zweier Hohlprofile eines Profilsystems, insbesondere eines Profilsystems einer Tür, eines Fensters oder dergleichen. Sie betrifft ferner einen Eck-/Stoßverbinder für eine solche Eck- und/oder Stoßverbindung.

Eck- und/oder Stoßverbindungen dieser Art sind in vielfältigen Ausführungen bekannt und insbesondere zur Verbindung horizontaler und vertikaler Profile, insbesondere Extrusions-Profilen, bei gerahmten Flügeln, Fahrflügeln und Seitenteilen oder dergleichen im Eckbereich vorgesehen.

Da solche Eck- und/oder Stoßverbindungen sowohl horizontal wirkende Kräfte, beispielsweise aufgrund einer Holm- und Windlast, als auch vertikal wirkende Gewichtslasten aufnehmen müssen, sind die zulässigen Flügelgewichte bisher häufig durch die vorhandenen Eck- und/oder Stoßverbindungen begrenzt. Zudem ergeben sich häufig auch Probleme im Zusammenhang mit einem Einsatz bei thermisch getrennten Profilsystemen.

Der Erfindung liegt die Aufgabe zugrunde, eine Eck- und/oder Stoßverbindung sowie einen Eck-/Stoßverbinder der eingangs genannten Art anzugeben, mit denen die zuvor erwähnten Probleme beseitigt sind. Dabei soll die Eck- und/oder Stoßverbindung insbesondere für einen Einsatz in relativ schlank dimensionierten Profilkonturen im Aufbau möglichst kompakt gehalten sein. Darüber hinaus sollen bei möglichst hoher Stabilität der Eck- und/oder Stoßverbindung auch bestimmte Fertigungstoleranzen zugelassen sowie Materialspannungen beim Einbau im Eckbereich aufgefangen werden. Schließlich soll bei thermisch getrennten Profilsystemen die thermische Trennung möglichst aufrechterhalten bleiben.

Erfindungsgemäß wird diese Aufgabe durch eine Eck- und/oder Stoßverbindung mit den Merkmalen des Anspruchs 1 sowie einen Eck-/Stoßverbinder mit den Merkmalen des Anspruchs 17 gelöst. Bevorzugte Ausführungsformen der erfindungsgemäßen Eck- und/oder Stoßverbindung ergeben sich aus den Unteransprüchen, der vorliegenden Beschreibung sowie der Zeichnung.

Die erfindungsgemäße Eck- und/oder Stoßverbindung zweier Hohlprofile eines Profilsystems, insbesondere eines Profilsystems einer Tür, eines Fensters oder dergleichen, umfasst einen als Verbundprofil ausgeführten Eck-/Stoßverbinder, der einen zumindest im Wesentlichen vollständig in eines der beiden Hohlprofile formschlüssig einsetzbaren Grundkörper umfasst, der über elastische, insbesondere thermisch isolierende, Stege miteinander verbundene Teilprofile aufweist, die mit in Bohrungen eingesetzten Schrauben, Bolzen und/oder dergleichen versehen sind, durch die der Eck-/Stoßverbinder in den beiden Hohlprofilen und die beiden Hohlprofile relativ zueinander fixiert sind und eine insbesondere mehrachsige formschlüssige Verbindung der beiden Hohlprofile hergestellt ist.

Aufgrund dieser Ausbildung können beispielsweise bei einem Einsatz bei gerahmten Flügeln, Fahrflügeln und Seitenteilen oder dergleichen im Eckbereich insbesondere erhöhte Flügelgewichte von beispielsweise mehr als 120 kg realisiert werden, die sowohl höhere horizontal wirkende Kräfte, wie sie beispielsweise durch Holm- und Windlasten hervorgerufen werden, als auch höhere vertikal wirkende Gewichtslasten abdecken. Zudem bleibt mit dem Einsatz einer erfindungsgemäßen Eck- und/oder Stoßverbindung mit thermisch isolierenden Stegen bei thermisch getrennten Profilsystemen die thermische Trennung in vollem Umfang aufrechterhalten. Die kompakte Bauweise der erfindungsgemäßen Eck- und/oder Stoßverbindung ermöglicht insbesondere auch einen Einsatz in schlanker dimensionierten Profilkonturen. Die Stege verleihen dem als Verbundprofil ausgeführten Eck-/Stoßverbinder zudem eine gewisse Elastizität, durch die Fertigungstoleranzen und Materialspannungen beim Einbau im Eckbereich aufgefangen werden können. Durch die Kombination aus Schraubenvorspannung und diversen Formschlüssen erhält die betreffende Eckverbindung eine relativ hohe Stabilität. Zudem ist sichergestellt, dass auch bei einem eventuellen Wegfall der Schraubenvorspannung der Formschluss erhalten bleibt, solange die Schrauben im System eingeschraubt bleiben. Ein abruptes Versagen der betreffenden Eckverbindung ist somit ausgeschlossen. Schließlich beschränkt sich die mechanische Bearbeitung der vertikalen Profile auf Bohrungen für die Schrauben.

Bevorzugt sind zumindest die zur formschlüssigen Verbindung der beiden Hohlprofile vorgesehen Bolzen verliersicher in den Teilprofilen des Grundkörpers des Eck-/Stoßverbinders aufgenommen. Der als Verbundprofil ausgeführte Eck-/Stoßverbinder ist somit für eine jeweilige Montage im betreffenden Eckbereich des Profilsystems optimal vorbereitet.

Die Teilprofile des Grundkörpers des Eck-/Stoßverbinders bestehen zweckmäßigerweise jeweils zumindest teilweise aus Aluminium, wobei sie bevorzugt jeweils ganz aus Aluminium bestehen. Damit ergibt sich bei relativ hoher Stabilität ein relativ geringes Gewicht der Eck-/Stoßverbinder.

Die die Teilprofile des Grundkörpers des Eck-/Stoßverbinders miteinander verbindenden, bevorzugt thermisch isolierenden Stege bestehen zweckmäßigerweise jeweils zumindest teilweise aus Kunststoff. Neben der thermisch isolierenden Funktion bringen die Stege somit auch eine gewisse Elastizität des Grundkörpers des Eck-/Stoßverbinders mit sich, mit der Fertigungstoleranzen und Materialspannungen beim Einbau im Eckbereich des betreffenden Profilsystems aufgefangen werden können.

Die dem Eck-/Stoßverbinder zugeordneten Bolzen sind bevorzugt jeweils als Stahlbolzen ausgeführt, wodurch ein entsprechend stabiler Formschluss erreicht wird.

Die dem Eck-/Stoßverbinder zugeordneten Schrauben sind zweckmäßigerweise jeweils als Stahlschrauben vorgesehen. Dabei kann eine jeweilige Schraube beispielsweise durch eine in einem der beiden Hohlprofile vorgesehene Bohrung hindurchgeführt sein und mit ihrem Schraubenkopf am Rand dieser Bohrung anliegen, während sie mit ihrem gegenüberliegenden Ende in ein Gewinde des anderen Hohlprofils einschraubbar ist.

Von Vorteil ist insbesondere auch, wenn die die Teilprofile des Grundkörpers des Eck-/Stoßverbinders miteinander verbindenden Stege jeweils verrollt bzw. gebogen sind. Durch eine entsprechende Biegung der thermisch isolierenden Stege kann die gewünschte Elastizität des Grundkörpers des Eck-/Stoßverbinders entsprechend vorgegeben werden.

Bevorzugt sind die die Teilprofile des Grundkörpers des Eck-/Stoßverbinders miteinander verbindenden Stege mit ihren einander gegenüberliegenden Randbereichen in Nuten der Teilprofile verankert, wodurch der Aufbau des die über die thermisch isolierenden Stege miteinander verbundenen Teilprofile umfassenden Grundkörpers entsprechend vereinfacht wird.

Die dem Eck-/Stoßverbinder zugeordneten Bolzen können für eine formschlüssige Aufnahme in einem jeweiligen Hohlprofil zumindest auf einer Seite des Grundkörpers von dessen Teilprofilen vorstehen. Die vorstehenden Bolzen können somit formschlüssig in das jeweils benachbarte Hohlprofil eingreifen.

Gemäß einer zweckmäßigen praktischen Ausführungsform der erfindungsgemäßen Eck-/Stoßverbindung stehen die dem Eck-/Stoßverbinder zugeordneten Bolzen für eine formschlüssige Aufnahme in einem der beiden Hohlprofile bzw. eine formschlüssige Justierung im anderen Hohlprofil auf einander gegenüberliegenden Seiten des Grundkörpers jeweils von dessen Teilprofilen vor. In diesem Fall sind die dem Eck-/Stoßverbinder zugeordneten Bolzen bevorzugt jeweils als durchgängige Bolzen vorgesehen.

Gemäß einer alternativen vorteilhaften Ausführungsform der erfindungsgemäßen Eck-/Stoßverbindung stehen die dem Eck-/Stoßverbinder zugeordneten Bolzen für eine formschlüssige Aufnahme in einem der Hohlprofile nur auf einer Seite des Grundkörpers von dessen Teilprofilen vor, während der Grundkörper auf der gegenüberliegenden Seite mit von dessen Teilprofilen vorstehenden Ansätzen, Zapfen oder dergleichen für eine formschlüssige Aufnahme in dem anderen Hohlprofil versehen ist.

Dabei sind die auf der einen Seite des Grundkörpers des Eck-/Stoßverbinders von dessen Teilprofilen vorstehenden Ansätze, Zapfen oder dergleichen bevorzugt einteilig mit den jeweiligen Teilprofilen des Grundkörpers ausgeführt, wobei sie insbesondere als gefräste Ansätze, Zapfen oder dergleichen vorgesehen sein können.

Die Schrauben, Bolzen und gegebenenfalls Ansätze, Zapfen oder dergleichen des Eck-/Stoßverbinders sind im montierten Zustand des Eck-/Stoßverbinders zweckmäßigerweise relativ zueinander zumindest im Wesentlichen parallel ausgerichtet.

Gemäß einer bevorzugten praktischen Ausführungsform der erfindungsgemäßen Eck- und/oder Stoßverbindung umfasst der Grundkörper des Eck-/Stoßverbinders zwei Teilprofile, die über zwei elastische, insbesondere thermisch isolierende, Stege miteinander verbunden und jeweils mit einer Schraube, einem Bolzen und gegebenenfalls einem Ansatz, einem Zapfen oder dergleichen versehen sind. Sind die Teilprofile des Grundkörpers mit Ansätzen, Zapfen oder dergleichen versehen, so können die Bolzen für eine formschlüssige Aufnahme in einem der Hohlprofile nur auf einer Seite des Grundkörpers von dessen Teilprofilen vorstehen, während die Ansätze, Zapfen oder dergleichen für eine formschlüssige Aufnahme in dem anderen Hohlprofil auf der gegenüberliegenden Seite des Grundkörpers von dessen Teilprofilen vorstehen. Sind keine Ansätze, Zapfen oder dergleichen vorgesehen, so können die dem Eck-/Stoßverbinder zugeordneten Bolzen für eine formschlüssige Aufnahme in einem der beiden Hohlprofile bzw. eine formschlüssige Justierung im anderen Hohlprofil auf einander gegenüberliegenden Seiten des Hohlkörpers jeweils von dessen Teilprofilen vorstehen. In beiden Fällen ergibt sich eine vierachsige Anordnung zur Abtragung horizontal wirkender Kräfte, wie sie insbesondere durch Holm- und Windlasten hervorgerufen werden, und vertikal wirkender Gewichtskräfte. Dabei können sowohl die Bolzen als auch die Schrauben jeweils insbesondere aus Stahl bestehen.

Der erfindungsgemäße Eck-/Stoßverbinder für eine erfindungsgemäße Eck- und/oder Stoßverbindung zeichnet sich dadurch aus, dass er als Verbundprofil ausgeführt ist und einen zumindest im Wesentlichen vollständig in eines der beiden Hohlprofile formschlüssig einsetzbaren Grundkörper umfasst, der über elastische, insbesondere thermisch isolierende, Stege miteinander verbundene Teilprofile aufweist, die mit in Bohrungen eingesetzten Schrauben, Bolzen und/oder dergleichen versehen sind, durch die der Eck-/Stoßverbinder in den beiden Hohlprofilen und die beiden Hohlprofile relativ zueinander fixierbar sind und eine insbesondere mehrachsige formschlüssige Verbindung der beiden Hohlprofile herstellbar ist.

Gemäß einer bevorzugten praktischen Ausführungsform des erfindungsgemäßen Eck-/Stoßverbinders sind zumindest die zur formschlüssigen Verbindung der beiden Hohlprofile vorgesehenen Bolzen verliersicher in den Teilprofilen des Grundkörpers des Eck-/Stoßverbinders aufgenommen.

Die Teilprofile des Grundkörpers des Eck-/Stoßverbinders bestehen bevorzugt jeweils zumindest teilweise aus Aluminium.

Die die Teilprofile des Grundkörpers des Eck-/Stoßverbinders miteinander verbindenden Stege bestehen vorteilhafterweise jeweils zumindest teilweise aus Kunststoff. Die dem Eck-/Stoßverbinder zugeordneten Bolzen sind bevorzugt jeweils als Stahlbolzen ausgeführt.

Die dem Eck-/Stoßverbinder zugeordneten Schrauben sind bevorzugst jeweils als Stahlschrauben vorgesehen. Die die Teilprofile des Grundkörpers des Eck-/Stoßverbinders miteinander verbindenden Stege sind vorteilhafterweise jeweils verrollt.

Gemäß einer bevorzugten praktischen Ausführungsform des erfindungsgemäßen Eck-/Stoßverbinders sind die die Teilprofile des Grundkörpers des Eck-/Stoßverbinders miteinander verbindenden Stege mit einander gegenüberliegenden Randbereichen in Nuten der Teilprofile verankert.

Von Vorteil ist insbesondere auch, wenn die dem Eck-/Stoßverbinder zugeordneten Bolzen für eine formschlüssige Aufnahme in einem jeweiligen Hohlprofil zumindest auf einer Seite des Grundkörpers von dessen Teilprofilen vorstehen.

Dabei stehen die dem Eck-/Stoßverbinder zugeordneten Bolzen gemäß einer zweckmäßigen praktischen Ausführungsform des erfindungsgemäßen Eck-/Stoßverbinders für eine formschlüssige Aufnahme in einem der beiden Hohlprofile bzw. eine formschlüssige Justierung im anderen Hohlprofil auf einander gegenüberliegenden Seiten des Grundkörpers jeweils von dessen Teilprofilen vor, wobei die dem Eck-/Stoßverbinder zugeordneten Bolzen vorzugsweise jeweils als durchgängige Bolzen vorgesehen sind.

Demgegenüber stehen die dem Eck-/Stoßverbinder zugeordneten Bolzen gemäß einer alternativen vorteilhaften Ausführungsform des erfindungsgemäßen Eck-/Stoßverbinders für eine formschlüssige Aufnahme in einem der Hohlprofile nur auf einer Seite des Grundkörpers von dessen Teilprofilen vor, während der Grundkörper auf der gegenüber liegenden Seite mit von dessen Teilprofilen vorstehenden Ansätzen, Zapfen oder dergleichen für eine formschlüssige Aufnahme in dem anderen Hohlprofil versehen ist. Dabei sind die auf der einen Seite des Grundkörpers des Eck-/Stoßverbinders von dessen Teilprofilen vorstehenden Ansätze, Zapfen oder dergleichen bevorzugt einteilig mit den jeweiligen Teilprofilen des Grundkörpers ausgeführt. Zweckmäßigerweise sind die auf der einen Seite des Grundkörpers des Eck-/Stoßverbinders von dessen Teilprofilen vorstehenden Ansätze, Zapfen oder dergleichen als gefräste Ansätze, Zapfen oder dergleichen vorgesehen.

Bevorzugt sind die Schrauben, Bolzen und gegebenenfalls Ansätze, Zapfen oder dergleichen des Eck-/Stoßverbinders im montierten Zustand des Eck-/Stoßverbinders relativ zueinander zumindest im Wesentlichen parallel ausgerichtet.

Gemäß einer vorteilhaften praktischen Ausführungsform des Eck-/Stoßverbinders umfasst der Grundkörper des Eck-/Stoßverbinders zwei Teilprofile, die über zwei elastische, insbesondere thermisch isolierende, Stege miteinander verbunden und jeweils mit einer Schraube, einem Bolzen und gegebenenfalls einem Ansatz, einem Zapfen oder dergleichen versehen sind. Sind die Teilprofile des Grundkörpers mit Ansätzen, Zapfen oder dergleichen versehen, so können die Bolzen für eine formschlüssige Aufnahme in einem der Hohlprofile nur auf einer Seite des Grundkörpers von dessen Teilprofilen vorstehen, während die Ansätze, Zapfen oder dergleichen für eine formschlüssige Aufnahme in dem anderen Hohlprofil auf der gegenüberliegenden Seite des Grundkörpers von dessen Teilprofilen vorstehen. Sind keine Ansätze, Zapfen oder dergleichen vorgesehen, so können die dem Eck-/Stoßverbinder zugeordneten Bolzen für eine formschlüssige Aufnahme in einem der beiden Hohlprofile bzw. eine formschlüssige Justierung im anderen Hohlprofil auf einander gegenüberliegenden Seiten des Hohlkörpers jeweils von dessen Teilprofilen vorstehen. In beiden Fällen ergibt sich eine vierachsige Ausführung des Eck-/Stoßverbinders zur Abtragung horizontal wirkender Kräfte, wie sie insbesondere durch Holm- und Windlasten hervorgerufen werden, und vertikal wirkender Gewichtskräfte. Dabei können sowohl die Bolzen als auch die Schrauben jeweils insbesondere aus Stahl bestehen.

Der erfindungsgemäße Eck-/Stoßverbinder ermöglicht insbesondere höhere Fahrflügelgewichte wie insbesondere über 120 kg. Durch die Schrauben und Bolzen ergibt sich gegenüber vertikal und horizontal wirkenden Lasten eine höhere Festigkeit. Durch die mehrachsige, beispielsweise vierachsige, Ausbildung des Eck-/Stoßverbinders können horizontal wirkende Kräfte, die beispielsweise durch Holm- und Windlast hervorgerufen werden, und vertikal wirkende Gewichtskräfte besser abgetragen werden. Durch die Ausführung des Eck-/Stoßverbinders als Verbundprofil und die entsprechende Zusammensetzung der verschiedenen Bauelemente in einer Baugruppe ergibt sich ein entsprechend einfacheres Handling. Bei einem Einsatz in Fahrflügeln, die eine asymmetrische Krafteinleitung erfahren, wird durch den Formschluss und die Verschraubungen beispielsweise die Gefahr eines Verkippens des oberen Türschuhs gegenüber seitlichen vertikalen Profilen reduziert. Damit wird insbesondere dem Umstand Rechnung getragen, dass das Fahrflügelgewicht nicht in der Ebene der Rollwagen liegt. Mit der erfindungsgemäßen Ausführung des Eck-/Stoßverbinders als Verbundprofil und der sich dadurch ergebenden Elastizität ergeben sich insbesondere Vorteile beim Ausgleich von Fertigungstoleranzen. Zudem wird aufgrund der thermisch isolierenden Stege beim Einsatz eines thermisch isolierenden Profilsystems die thermische Trennung aufrechterhalten. Mit einer mehrachsigen, insbesondere vierachsigen Ausführung des Eck-/Stoßverbinders ergibt sich gegenüber den bisher üblichen zweiachsigen Ausführungen durch die entsprechende Redundanz eine höhere Sicherheit. Zudem verkleinert sich durch eine solche Vier-Achsigkeit und den Formschluss der vertikale Verschubweg vertikaler Profile gegenüber horizontalen Profilen unter Lasteinfluss, wobei der betreffende Verschubweg beispielsweise kleiner als 0,5 mm gehalten werden kann.

Grundsätzlich dürfen Schrauben nicht auf Scherung beansprucht werden. Bei einem Verlust der Vorspannung kann eine solche Scherung von Schrauben jedoch nicht ausgeschlossen werden. Aufgrund der erfindungsgemäßen Ausbildung werden die Scherkräfte auf die Bolzen und gegebenenfalls die zusätzlich vorgesehenen Ansätze, Zapfen oder dergleichen verteilt. Indem die durch die Bolzen und Schrauben gebildeten Achsen insbesondere aus Stahl bestehen, ergibt sich für diese gegenüber den umgebenden zu befestigenden Materialien wie beispielsweise den aus Aluminium bestehenden Teilprofilen eine höhere Festigkeit. Für das Anziehen der Befestigungsschrauben ist jeweils ein fester Anschlag vorgesehen. Zudem besitzt der als Verbundprofil ausgeführte Eck-/Stoßverbinder eine kompakte Bauform. Schließlich ergibt sich mit der erfindungsgemäßen Eck-/Stoßverbindung eine höhere Homogenität der Materialien:
- Verbundprofil bei vertikalen, horizontalen Profilen und Verbundprofil beim Verbinder
- gleiche Wärmeausdehnung, da keine oder allenfalls geringe Materialspannung bei Temperaturunterschieden.

Die Erfindung wird im Folgenden anhand von Ausführungsbeispielen unter Bezugnahme auf die Zeichnung näher erläutert; in dieser zeigen:
- Fig. 1: eine schematische perspektivische Darstellung einer beispielhaften Ausführungsform eines erfindungsgemäßen Eck-/Stoßverbinders mit eingesetzten, beidseitig vorstehenden Bolzen,
- Fig. 2: eine weitere schematische perspektivische Darstellung des Eck-/Stoßverbinders gemäß Fig. 1,
- Fig. 3: eine schematische Draufsicht des Eck-/Stoßverbinders gemäß Fig. 1,
- Fig. 4: eine schematische Schnittdarstellung des Eck-/Stoßverbinders gemäß Fig. 1, geschnitten entlang der Linie B-B der Fig. 3,
- Fig. 5: eine schematische Stirnansicht des Eck-/Stoßverbinders gemäß Fig. 1,
- Fig. 6: eine schematische perspektivische Darstellung eines mit Hohlkammern und Schraubkanälen versehenen horizontalen Hohlprofils,
- Fig. 7: eine schematische perspektivische Darstellung des horizontalen Hohlprofils gemäß Fig. 6 mit einem Eck-/Stoßverbinder gemäß Fig. 1, dessen Bolzen formschlüssig in die Hohlkammern des Hohlprofils eingreifen,
- Fig. 8: eine schematische Schnittdarstellung einer Eck-/Stoßverbindung eines horizontalen Hohlprofils gemäß Fig. 6 und eines vertikalen Hohlprofils mit einem Eck-/Stoßverbinder gemäß Fig. 1, dessen Grundkörper zumindest im Wesentlichen vollständig in das vertikale Hohlprofil eingesetzt und durch dessen Schrauben der Eck-/Stoßverbinder in den beiden Hohlprofilen und die beiden Hohlprofile relativ zueinander fixiert sind,
- Fig. 9: eine schematische perspektivische Teildarstellung der Eck-/Stoßverbindung gemäß Fig. 8,
- Fig. 10: eine weitere perspektivische Teildarstellung der Eck-/Stoßverbindung gemäß Fig. 8,
- Fig. 11: eine schematische perspektivische Darstellung einer weiteren beispielhaften Ausführungsform eines erfindungsgemäßen Eck-/Stoßverbinders mit eingesetzten, einseitig vorstehenden Bolzen und auf der gegenüberliegenden Seite vorstehenden Ansätzen,
- Fig. 12: eine weitere schematische perspektivische Darstellung des Eck-/Stoßverbinders gemäß Fig. 11 und
- Fig. 13: eine teilweise geschnittene schematische, perspektivische Darstellung des Eck-/Stoßverbinders gemäß Fig. 11.

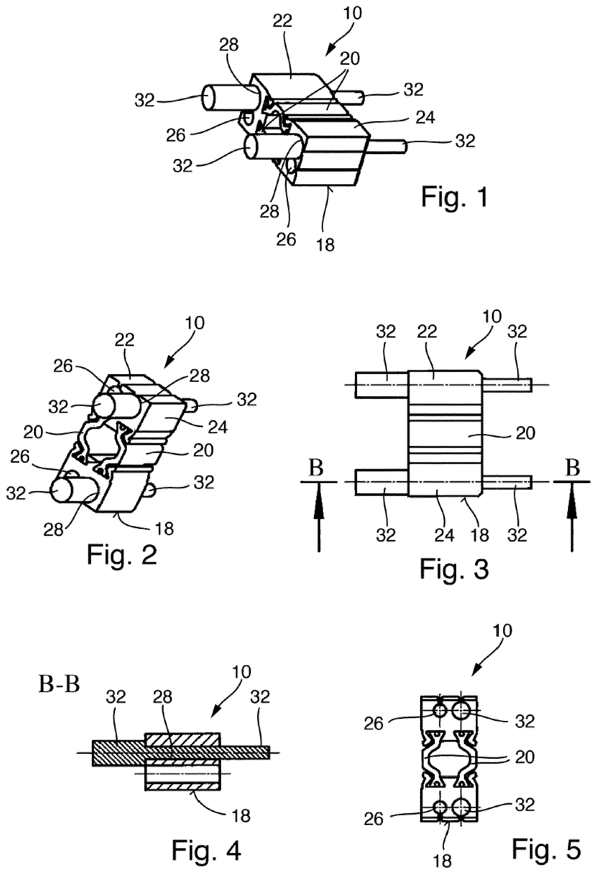

Die Fig. 1 bis 13 zeigen unterschiedliche beispielhafte Ausführungsformen eines erfindungsgemäßen Eck-/Stoßverbinders 10 zur Herstellung einer Eck-/Stoßverbindung 12 zweier Hohlprofile 14, 16 eines Profilsystems, bei dem es sich insbesondere um eine Profilsystem einer Tür, eines Fensters oder dergleichen handeln kann.

Dabei ist der Eck-/Stoßverbinder 10 jeweils als Verbundprofil mit einem zumindest im Wesentlichen vollständig in eines der beiden Hohlprofile 14, 16 formschlüssig einsetzbaren Grundkörper 18 ausgeführt, der über elastische, insbesondere thermisch isolierende, Stege 20 miteinander verbundene Teilprofile 22, 24 aufweist, die mit in Bohrungen 26, 28 eingesetzten Schrauben 30 und Bolzen 32 versehen sind, durch die der Eck-/Stoßverbinder 10 in den beiden Hohlprofilen 14, 16 und die beiden Hohlprofile 14, 16 relativ zueinander fixierbar sind und eine insbesondere mehrachsige formschlüssige Verbindung der beiden Hohlprofile 14, 16 herstellbar ist.

Zumindest die zur formschlüssigen Verbindung der beiden Hohlprofile 14, 16 vorgesehenen Bolzen 32 können verliersicher in den Teilprofilen 22, 24 des Grundkörpers 18 des Eck-/Stoßverbinders 10 aufgenommen sein.

Die Teilprofile 22, 24 des Grundkörpers 18 eines jeweiligen Eck-/Stoßverbinders 10 können jeweils zumindest teilweise aus Aluminium bestehen.

Die die Teilprofile 22, 24 des Grundkörpers 18 des Eck-/Stoßverbinders 10 miteinander verbindenden Stege 20 können insbesondere jeweils zumindest teilweise aus Kunststoff bestehen, während die dem Eck-/Stoßverbinder 10 zugeordneten Bolzen insbesondere jeweils als Stahlbolzen ausgeführt sein können.

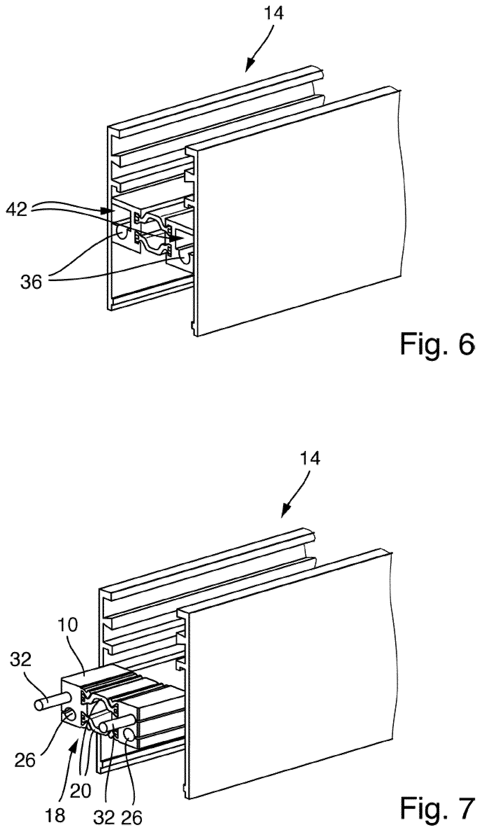

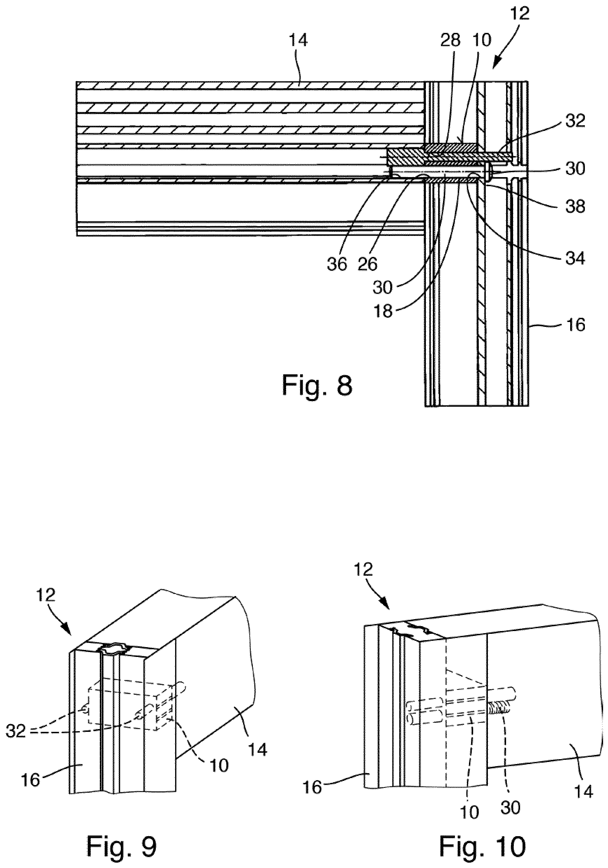

Die einem jeweiligen Eck-/Stoßverbinder 10 zugeordneten Schrauben 30 können insbesondere jeweils als gängige Stahlschrauben vorgesehen sein. Wie am besten anhand der Fig. 8 zu erkennen ist, kann dabei eine jeweilige Schraube 30 durch eine in einem der beiden Hohlprofile 14, 16, im vorliegenden Fall durch eine in einem vertikalen Hohlprofil 16 vorgesehene Bohrung 34 hindurchgeführt sein und mit ihrem Schraubenkopf 36 am Rand der Bohrung 34 anliegen, während sie mit ihrem gegenüberliegenden Ende in einen Schraubkanal 36 des anderen Hohlprofils, hier einen Schraubkanal 36 des horizontalen Hohlprofils 14 einschraubbar ist (vgl. auch Fig. 6).

Wie insbesondere anhand der Fig. 1, 2, 5 und 11 bis 13 zu erkennen ist, können die die Teilprofile 22, 24 des Grundkörpers 18 eines jeweiligen Eck-/Stoßverbinders 10 miteinander verbindenden Stege 20 jeweils verrollt bzw. gebogen und mit ihren einander gegenüberliegenden Randbereichen 38 in Nuten der Teilprofile 22, 24 verankert sein.

Die einem jeweiligen Eck-/Stoßverbinder 10 zugeordneten Bolzen 32 stehen für eine formschlüssige Aufnahme in einem jeweiligen Hohlprofil 14, 16 zumindest auf einer Seite des Grundkörpers 18 von dessen Teilprofilen 22, 24 vor.

Bei dem in den Fig. 1 bis 5 und 7 bis 10 dargestellten beispielhaften Eck-/Stoßverbinder stehen die diesem zugeordneten Bolzen 32 für eine formschlüssige Aufnahme in einem der beiden Hohlprofile 14, 16 bzw. eine formschlüssige Justierung im anderen Hohlprofil auf einander gegenüberliegenden Seiten des Grundkörpers 18 jeweils von dessen Teilprofilen 22, 24 vor. Dabei sind die dem Eck-/Stoßverbinder 10 zugeordneten Bolzen 32 jeweils als durchgängige Bolzen vorgesehen.

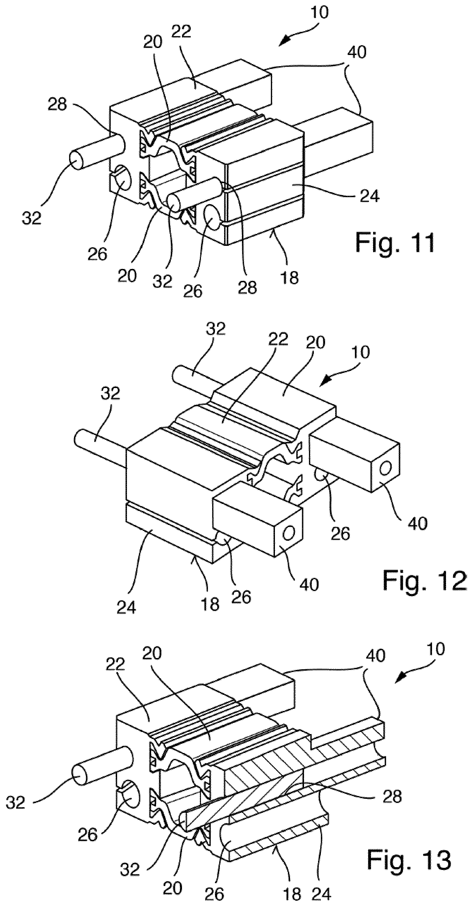

Demgegenüber ist in den Fig. 11 bis 13 eine beispielhafte Ausführungsform eines Eck-/Stoßverbinders 10 gezeigt, bei der die dem Eck-/Stoßverbinder 10 zugeordneten Bolzen 32 für eine formschlüssige Aufnahme in einem der Hohlprofile 14, 16 nur auf einer Seite des Grundkörpers 18 von dessen Teilprofilen 22, 24 vorstehen, während der Grundkörper 18 auf der gegenüberliegenden Seite mit von dessen Teilprofilen 22, 24 vorstehenden Ansätzen, Zapfen 40 oder dergleichen für eine formschlüssige Aufnahme in dem anderen Hohlprofil 22, 24 versehen ist. Im vorliegenden Fall sind die Ansätze, Zapfen 40 oder dergleichen beispielsweise einteilig mit den jeweiligen Teilprofilen 22, 24 des Grundkörpers 18 ausgeführt, wobei sie insbesondere als gefräste Ansätze, Zapfen oder dergleichen vorgesehen sein können.

Die Schrauben 30, Bolzen 32 und gegebenenfalls Ansätze, Zapfen 40 oder dergleichen eines jeweiligen Eck-/Stoßverbinders 10 können im montierten Zustand des Eck-/Stoßverbinders 10 relativ zueinander zumindest im Wesentlichen parallel ausgerichtet sein.

Bei den dargestellten Ausführungsformen umfasst der Grundkörper eines jeweiligen Eck-/Stoßverbinders 10 jeweils zwei Teilprofile 22, 24, die über zwei elastische, insbesondere thermisch isolierende, Stege 20 miteinander verbunden und jeweils mit einer Schraube 30, einem Bolzen 32 und gegebenenfalls einem Ansatz, einem Zapfen 40 oder dergleichen versehen sind. Für die jeweilige Eck-/Stoßverbindung 12 ergibt sich somit eine vierachsige Anordnung zur Abtragung von beispielsweise durch Holm- und Windlasten hervorgerufener horizontal wirkender Kräfte und vertikal wirkender Gewichtskräfte.

Bei der in den Fig. 8 bis 10 dargestellten Eck-/Stoßverbindung 12 ist ein Eck-/Stoßverbinder 10 gemäß den Fig. 1 bis 5 mit beidseitig vom Grundkörper 18 bzw. dessen Teilprofilen 22, 24 vorstehenden Bolzen 32 zur Verbindung eines horizontalen Hohlprofils 14 mit einem vertikalen Hohlprofil 16 vorgesehen, wobei im montierten Zustand der Grundkörper 18 des Eck-/Stoßverbinders 10 zumindest im Wesentlichen vollständig im vertikalen Hohlprofil 16 aufgenommen ist. Über die jeweils durchgängigen Schrauben 30 und Bolzen 32 werden die beiden Hohlprofile 14, 16 relativ zueinander fixiert und formschlüssig miteinander verbunden. Dabei greifen die beidseitig vom Grundkörper 18 bzw. dessen Teilprofilen 22, 24 vorstehenden Bolzen 32 auf der einen Seite in Hohlkammern 42 des horizontalen Hohlprofils 14 ein (vgl. auch Fig. 6), während die mit ihrem Schraubenkopf 30' im vertikalen Hohlprofil 16 abgestützten Schrauben 30 mit ihren gegenüberliegenden Enden in die Schraubkanäle 36 eingeschraubt sind. Wie dargestellt, können die in die Hohlkammern 42 des horizontalen Hohlprofils 14 eingreifenden Abschnitte der Bolzen 32 einen größeren Querschnitt besitzen als deren durch die Bohrungen 28 der Teilprofile 22, 24 hindurchgeführten und sich darüber hinaus in das vertikale Hohlprofil 16 erstreckenden Abschnitte.

Der in den Fig. 11 bis 13 dargestellte Eck-/Stoßverbinder 10 unterscheidet sich von dem gemäß den Fig. 1 bis 5, 7 und 8 im Wesentlichen nur dadurch, dass dessen Grundkörper 18 bzw. dessen Teilprofile 22, 24 mit einseitig vorstehenden Bolzen 32 und auf der gegenüberliegenden Seite mit vorstehenden Ansätzen 40 versehen sind. Auch im vorliegenden Fall werden die beiden Hohlprofile 14, 16 relativ zueinander und der Eck-/Stoßverbinder 10 in den beiden Hohlräumen 14, 16 wieder durch durchgängige (in den Fig. 11 bis 13 nicht gezeigte) Schrauben 30 fixiert.

### Bezuaszeichenliste

- 10: Eck-/Stoßverbinder
- 12: Eck- und/oder Stoßverbindung
- 14: horizontales Hohlprofil
- 16: vertikales Hohlprofil
- 18: Grundkörper
- 20: elastischer Steg
- 22: Teilprofil
- 24: Teilprofil
- 26: Bohrung
- 28: Bohrung
- 30: Schraube
- 30': Schraubenkopf
- 32: Bolzen
- 34: Bohrung
- 36: Schraubenkanal
- 38: Randbereich
- 40: Ansatz, Zapfen
- 42: Hohlkammer

## Patentansprüche

1. Eck- und/oder Stoßverbindung (12) zweier Hohlprofile (14, 16) eines Profilsystems, insbesondere eines Profilsystems einer Tür, eines Fensters oder dergleichen, mit einem als Verbundprofil ausgeführten Eck- /Stoßverbinder (10), der einen zumindest im Wesentlichen vollständig in eines der beiden Hohlprofile (14, 16) formschlüssig einsetzbaren Grundkörper (18) umfasst, der über elastische, insbesondere thermisch isolierende, Stege (20) miteinander verbundene Teilprofile (22, 24) aufweist, die mit in Bohrungen (26, 28) eingesetzten Schrauben (30), Bolzen (32) und/oder dergleichen versehen sind, durch die der Eck-/Stoßverbinder (10) in den beiden Hohlprofilen (14, 16) und die beiden Hohlprofile (14, 16) relativ zueinander fixiert sind und eine insbesondere mehrachsige formschlüssige Verbindung der beiden Hohlprofile (14, 16) hergestellt ist.

2. Eck- und/oder Stoßverbindung nach Anspruch 1,
**dadurch gekennzeichnet, dass** zumindest die zur formschlüssigen Verbindung der beiden Hohlprofile (14, 16) vorgesehenen Bolzen (32) verliersicher in den Teilprofilen (22, 24) des Grundkörpers (18) des Eck-/Stoßverbinders (10) aufgenommen sind.

3. Eck- und/oder Stoßverbindung nach Anspruch 1 oder 2,
**dadurch gekennzeichnet, dass** die Teilprofile (22, 24) des Grundkörpers (18) des Eck-/Stoßverbinders (10) jeweils zumindest teilweise aus Aluminium bestehen.

4. Eck- und/oder Stoßverbindung nach zumindest einem der vorstehenden Ansprüche,
**dadurch gekennzeichnet, dass** die die Teilprofile (22, 24) des Grundkörpers (18) des Eck-/Stoßverbinders (10) miteinander verbindenden Stege (20) jeweils zumindest teilweise aus Kunststoff bestehen.

5. Eck- und/oder Stoßverbindung nach zumindest einem der vorstehenden Ansprüche,
**dadurch gekennzeichnet, dass** die dem Eck-/Stoßverbinder (10)zugeordneten Bolzen (32) jeweils als Stahlbolzen ausgeführt sind.

6. Eck- und/oder Stoßverbindung nach zumindest einem der vorstehenden Ansprüche,
**dadurch gekennzeichnet, dass** die dem Eck-/Stoßverbinder (10) zugeordneten Schrauben (30) jeweils als Stahlschrauben vorgesehen sind.

7. Eck- und/oder Stoßverbindung nach zumindest einem der vorstehenden Ansprüche,
**dadurch gekennzeichnet, dass** die die Teilprofile (22, 24) des Grundkörpers (18) des Eck-/Stoßverbinders (10) miteinander verbindenden Stege (20) jeweils verrollt sind.

8. Eck- und/oder Stoßverbindung nach zumindest einem der vorstehenden Ansprüche,
**dadurch gekennzeichnet, dass** die die Teilprofile (22, 24) des Grundkörpers des Eck-/Stoßverbinders miteinander verbindenden Stege (20) mit einander gegenüberliegenden Randbereichen (38) in Nuten der Teilprofile (22, 24) verankert sind.

9. Eck- und/oder Stoßverbindung nach zumindest einem der vorstehenden Ansprüche,
**dadurch gekennzeichnet, dass** die dem Eck-/Stoßverbinder (10) zugeordneten Bolzen (32) für eine formschlüssige Aufnahme in einem jeweiligen Hohlprofil (14, 16) zumindest auf einer Seite des Grundkörpers (18) von dessen Teilprofilen (22, 24) vorstehen.

10. Eck- und/oder Stoßverbindung nach zumindest einem der vorstehenden Ansprüche,
**dadurch gekennzeichnet, dass** die dem Eck-/Stoßverbinder (10) zugeordneten Bolzen (32) für eine formschlüssige Aufnahme in einem der beiden Hohlprofile (14, 16) bzw. eine formschlüssige Justierung im anderen Hohlprofil auf einander gegenüberliegenden Seiten des Grundkörpers (18) jeweils von dessen Teilprofilen (22, 24) vorstehen.

11. Eck- und/oder Stoßverbindung nach Anspruch 10,
**dadurch gekennzeichnet, dass** die dem Eck-/Stoßverbinder (10) zugeordneten Bolzen (32) jeweils als durchgängige Bolzen vorgesehen sind.

12. Eck- und/oder Stoßverbindung nach einem der Ansprüche 1 bis 9,
**dadurch gekennzeichnet, dass** die dem Eck-/Stoßverbinder(10) zugeordneten Bolzen (32) für eine formschlüssige Aufnahme in einem der Hohlprofile (14, 16) nur auf einer Seite des Grundkörpers (18) von dessen Teilprofilen (22, 24) vorstehen und der Grundkörper (18) auf der gegenüber liegenden Seite mit von dessen Teilprofilen (22, 24) vorstehenden Ansätzen, Zapfen (40) oder dergleichen für eine formschlüssige Aufnahme in dem anderen Hohlprofil versehen ist.

13. Eck- und/oder Stoßverbindung nach Anspruch 12,
**dadurch gekennzeichnet, dass** die auf der einen Seite des Grundkörpers (18) des Eck-/Stoßverbinders (10) von dessen Teilprofilen (22, 24) vorstehenden Ansätze, Zapfen (40) oder dergleichen einteilig mit den jeweiligen Teilprofilen (22, 24) des Grundkörpers (18) ausgeführt sind.

14. Eck- und/oder Stoßverbindung nach Anspruch 13,
**dadurch gekennzeichnet, dass** die auf der einen Seite des Grundkörpers (18) des Eck-/Stoßverbinders (10) von dessen Teilprofilen (22, 24) vorstehenden Ansätze, Zapfen (40) oder dergleichen als gefräste Ansätze, Zapfen oder dergleichen vorgesehen sind.

15. Eck- und/oder Stoßverbindung nach zumindest einem der vorstehenden Ansprüche,
**dadurch gekennzeichnet, dass** die Schrauben (30), Bolzen (32) und gegebenenfalls Ansätze, Zapfen (40) oder dergleichen des Eck-/Stoßverbinders (10) im montierten Zustand des Eck-/Stoßverbinders (10) relativ zueinander zumindest im Wesentlichen parallel ausgerichtet sind.

16. Eck- und/oder Stoßverbindung nach zumindest einem der vorstehenden Ansprüche,
**dadurch gekennzeichnet, dass** der Grundkörper (18) des Eck-/Stoßverbinders (10) zwei Teilprofile (22, 24) umfasst, die über zwei elastische, insbesondere thermisch isolierende, Stege (20) miteinander verbunden und jeweils mit einer Schraube (30), einem Bolzen (32) und gegebenenfalls einem Ansatz, einem Zapfen (40) oder dergleichen versehen sind.

17. Eck-/Stoßverbinder (10) für eine Eck- und/oder Stoßverbindung (12) nach zumindest einem der vorstehenden Ansprüche,
**dadurch gekennzeichnet, dass** der Eck-/Stoßverbinder (10) als Verbundprofil ausgeführt ist und einen zumindest im Wesentlichen vollständig in eines der beiden Hohlprofile (14, 16) formschlüssig einsetzbaren Grundkörper (18) umfasst, der über elastische, insbesondere thermisch isolierende, Stege (20) miteinander verbundene Teilprofile (22, 24) aufweist, die mit in Bohrungen (26, 28) eingesetzten Schrauben (30), Bolzen (32) und/oder dergleichen versehen sind, durch die der Eck-/Stoßverbinder in den beiden Hohlprofilen (14, 16) und die beiden Hohlprofile (14, 16) relativ zueinander fixierbar sind und eine insbesondere mehrachsige formschlüssige Verbindung der beiden Hohlprofilen (14, 16) herstellbar ist.

18. Eck-/Stoßverbinder nach Anspruch 17,
**dadurch gekennzeichnet, dass** zumindest die zur formschlüssigen Verbindung der beiden Hohlprofile (14, 16) vorgesehenen Bolzen (32) verliersicher in den Teilprofilen (22, 24) des Grundkörpers (18) des Eck-/Stoßverbinders (10) aufgenommen sind und/oder die Teilprofile (22, 24) des Grundkörpers (18) des Eck-/Stoßverbinders (10) jeweils zumindest teilweise aus Aluminium bestehen.

19. Eck-/Stoßverbinder nach Anspruch 17 oder 18,
**dadurch gekennzeichnet, dass** die die Teilprofile (22, 24) des Grundkörpers (18) des Eck-/Stoßverbinders (10) miteinander verbindenden Stege (20) jeweils zumindest teilweise aus Kunststoff bestehen und/oder die dem Eck-/Stoßverbinder (10) zugeordneten Bolzen (32) jeweils als Stahlbolzen ausgeführt sind.

20. Eck-/Stoßverbinder nach zumindest einem der vorstehenden Ansprüche,
**dadurch gekennzeichnet, dass** die dem Eck-/Stoßverbinder (10) zugeordneten Schrauben (30) jeweils als Stahlschrauben vorgesehen und/oder die die Teilprofile (22, 24) des Grundkörpers (18) des Eck-/Stoßverbinders (10) miteinander verbindenden Stege (20) jeweils verrollt sind.

21. Eck-/Stoßverbinder nach zumindest einem der vorstehenden Ansprüche,
**dadurch gekennzeichnet, dass** die die Teilprofile (22, 24) des Grundkörpers des Eck-/Stoßverbinders miteinander verbindenden Stege (20) mit einander gegenüberliegenden Randbereichen (38) in Nuten der Teilprofile (22, 24) verankert sind und/oder die dem Eck-/Stoßverbinder (10) zugeordneten Bolzen (32) für eine formschlüssige Aufnahme in einem jeweiligen Hohlprofil (14, 16) zumindest auf einer Seite des Grundkörpers (18) von dessen Teilprofilen (22, 24) vorstehen.

22. Eck-/Stoßverbinder nach zumindest einem der vorstehenden Ansprüche,
**dadurch gekennzeichnet, dass** die dem Eck-/Stoßverbinder (10) zugeordneten Bolzen (32) für eine formschlüssige Aufnahme in einem der beiden Hohlprofile (14, 16) bzw. eine formschlüssige Justierung im anderen Hohlprofil auf einander gegenüberliegenden Seiten des Grundkörpers (18) jeweils von dessen Teilprofilen (22, 24) vorstehen, wobei die dem Eck-/Stoßverbinder (10) zugeordneten Bolzen (32) vorzugsweise jeweils als durchgängige Bolzen vorgesehen sind.

23. Eck-/Stoßverbinder nach einem der Ansprüche 17 bis 21,
**dadurch gekennzeichnet, dass** die dem Eck-/Stoßverbinder(10) zugeordneten Bolzen (32) für eine formschlüssige Aufnahme in einem der Hohlprofile (14, 16) nur auf einer Seite des Grundkörpers (18) von dessen Teilprofilen (22, 24) vorstehen und der Grundkörper (18) auf der gegenüber liegenden Seite mit von dessen Teilprofilen (22, 24) vorstehenden Ansätzen, Zapfen (40) oder dergleichen für eine formschlüssige Aufnahme in dem anderen Hohlprofil versehen ist, wobei vorzugsweise die auf der einen Seite des Grundkörpers (18) des Eck-/Stoßverbinders (10) von dessen Teilprofilen (22, 24) vorstehenden Ansätze, Zapfen (40) oder dergleichen einteilig mit den jeweiligen Teilprofilen (22, 24) des Grundkörpers (18) ausgeführt sind, wobei vorzugsweise die auf der einen Seite des Grundkörpers (18) des Eck-/Stoßverbinders (10) von dessen Teilprofilen (22, 24) vorstehenden Ansätze, Zapfen (40) oder dergleichen als gefräste Ansätze, Zapfen oder dergleichen vorgesehen sind.

24. Eck-/Stoßverbinder nach zumindest einem der vorstehenden Ansprüche,
**dadurch gekennzeichnet, dass** die Schrauben (30), Bolzen (32) und gegebenenfalls Ansätze, Zapfen (40) oder dergleichen des Eck-/Stoßverbinders (10) im montierten Zustand des Eck-/Stoßverbinders (10) relativ zueinander zumindest im Wesentlichen parallel ausgerichtet sind und/oder der Grundkörper (18) des Eck-/Stoßverbinders (10) zwei Teilprofile (22, 24) umfasst, die über zwei elastische, insbesondere thermisch isolierende, Stege (20) miteinander verbunden und jeweils mit einer Schraube (30), einem Bolzen (32) und gegebenenfalls einem Ansatz, einem Zapfen (40) oder dergleichen versehen sind.
